# EUROPEAN PATENT APPLICATION

(11) **EP 4 427 631 A1**
(43) Date of publication of application: **11.09.2024**
(21) Application number: 22894223.1
(22) Date of filing: 10.06.2022
(51) Int. Cl.: A47B 9/20, A47C 3/40, A47B 91/02, A47B 13/02, F16B 7/10

(54) **SLIDING STRUCTURE, MOUNTING METHOD AND ACTUATOR**

(30) Priority: 16.11.2021 CN 202111354229
(71) Applicant: Changzhou Kaidi Electrical Co., Ltd., Changzhou, Jiangsu 213000 (CN)
(72) Inventor: YAO, Xinran, hangzhou, Jiangsu 213000 (CN); ZHU, Gengxing, hangzhou, Jiangsu 213000 (CN); GONG, Zhenbin, hangzhou, Jiangsu 213000 (CN)
(74) Representative: Herrero & Asociados, S.L.
(86) International application number: PCT/CN2022/098156
(87) International publication number: WO 2023/087680

(57) **Abstract**

The present invention discloses a sliding structure, comprising: a first pipe body; a second pipe body, slidable provided inside the first pipe body; a second sliding part, one side of which is clamped on the outer wall of the second pipe body, and the other side of which is slidable connected to the inner wall of the first pipe body; and a first sliding part, which, when not mounted, has a part that extends beyond the end of second pipe body, one side directly clamped on the second pipe body or indirectly clamped on the second pipe body by the second sliding part, and which, when mounted, is detached from the second pipe body, one side of the first slider clamped on the inner wall of the first pipe body, and the other side of the first slider slidable connected to the outer wall of the second pipe body. The present invention reduces the pocket holes required for mounting the first sliding part, reduces the production cost, enhances the service strength of the pipe wall, and avoids the deformation of the pipe wall.

## Description

### TECHNICAL FIELD

The present invention relates to the technical field of sliding structures, particularly to a sliding structure, a mounting method, and an actuator.

### BACKGROUND

Actuators are widely used in furniture or electrical appliances with adjustable positions, such as beds, chairs and tables. The main function of actuators is to drive a target object to adjust its position, and its movement is intuitively represented as the linear reciprocating movement on the part of retractable pipe fittings. Sliding structures such as sliders, sliding blades, sliding sleeves are usually disposed between the relatively moving pipes fittings to support components, reduce friction and eliminate clearance. In order to mount the sliding structures on inner walls or outer walls of the pipe fittings, holes are usually processed on side walls of the pipe fittings, and parts of the sliding structures are embedded in the holes.

For example, the Chinese patent with publication number CN104863937B discloses a casing assembly structure and a lifting column, which includes two external casings which can be relatively retractable. A slider is disposed between the two casings, and a groove which does not penetrate an outer wall is disposed on an inner side wall of an outer pipe of the two casings to avoid the presence of holes on the exposed pipe wall, which may affect aesthetics. However, in order to fit the corresponding slider into the groove on the inner side wall of the outer pipe, an inner pipe of the two casings is equipped with a hole groove structure to dodge the slider. These technological holes and grooves, which are made merely to facilitate the mounting, actually increase the processing cost, and to a certain extent, cause local stress changes, resulting in the deformation of pipe fittings, affecting the precision and smoothness of retractable movement of pipe fittings, and leading to the reduction of the rate of finished products. On the other hand, in order to facilitate mass production and reduce stress and deformation caused by processing, a preferred processing method is laser cutting, which is relatively efficient but expensive. At present, it is very difficult to mount the sliding part in the gap between two pipe fittings under the premise of avoiding too many holes in a pipe body.

### SUMMARY

The present invention aims at solving at least one of the technical problems existing in the prior art.

To this end, the present invention proposes a sliding structure, a mounting method, and an actuator, where the sliding structure has the advantages of removing the technological grooves which are disposed on the inner and outer pipe walls to assist mounting, firmly clamping the sliding part on the relatively retractable pipe fittings to prevent the sliding part from easily coming out or being pulled out, and at the same time improving the mounting speed and convenience.

The sliding structure according to the embodiment of the present invention includes a first pipe body; a second pipe body slidable disposed inside the first pipe body; a second sliding part, one side of which is clamped on an outer wall of the second pipe body, and the other side of which is slidable connected to an inner wall of the first pipe body; a first sliding part, a part of which extends beyond the end of the second pipe body when not mounted into the first pipe body, and which is directly clamped on the second pipe body or indirectly clamped on the second pipe body by the second sliding part; when mounted into the first pipe body, the first sliding part is detached from the end of the second pipe body, one side of the first sliding part clamped on the inner wall of the first pipe body, and the other side of the first sliding part slidable connected to the outer wall of the second pipe body.

The present invention has the beneficial effects that the pocket holes required for mounting the first sliding part are reduced in quantity, which reduces the production cost, improves the service strength of the pipe wall, and avoid the deformation of the pipe wall; by directly or indirectly clamping the first sliding part on the second pipe body, part of the first sliding part extends beyond the end of the second pipe body; no additional positioning tool is required to fix the first sliding part, thus reducing the cost and improving the assembly efficiency.

According to an embodiment of the present invention, the first sliding part includes a connecting part, which is disposed between the second pipe body and the first pipe body; a flange edge, which is disposed at one end of the connecting part, and abuts against an end face of the first pipe body; and multiple first sliders, which are arranged between the second pipe body and the first pipe body, and are connected to the other end of the connecting part.

According to an embodiment of the present invention, an end of the outer wall of the second pipe body is equipped with multiple second slotted holes, and the second sliding part includes second bosses which areclamped in the multiple second slotted holes; and second sliders which are connected to the second bosses, and are slidable connected to the first pipe body.

According to an embodiment of the present invention, when not mounted into the first pipe body, the first sliding part is directly clamped on the second pipe body, the first sliding part is inclined towards the inner side of the second pipe body, and each first slider extends beyond the end of the second pipe body, and the first sliding part is clamped on the end of the second pipe body.

According to an embodiment of the present invention, a clamping part is disposed between each first slider and the connecting part to face towards the second pipe body. When the first sliding part is not mounted into the first pipe body, the clamping part is clamped against the end of the second pipe body.

According to an embodiment of the present invention, the clamping part is a transition surface, one end of which is connected to the first slider, and the other end of which is connected to the connecting part.

According to an embodiment of the present invention, when not mounted into the first pipe body, the first sliding part is indirectly clamped on the second pipe body, the first sliding part is clamped with the second sliding part, and the first sliding part extends beyond the end of the second pipe body.

According to an embodiment of the present invention, the second sliding part is equipped with a clamping tooth, the first sliding part is equipped with a bayonet matching the clamping tooth, and when the first sliding part is not mounted into the first pipe body, the clamping tooth is clamped with the bayonet.

According to an embodiment of the present invention, the bayonet includes a stop wall and an escape wall, which are connected to each other, the stop wall is located at a side of the bayonet close to the flange edge, an acute angle is formed between the stop wall and the escape wall, and the clamping tooth is a rod-shaped protrusion inclined towards the bayonet. When the first sliding part is not mounted into the first pipe body, a bottom surface of the rod-shaped projection abuts against the stop wall, and a side surface of the rod-shaped projection abuts against the escape wall.

According to an embodiment of the present invention, a sliding gap exists between the second pipe body and the first pipe body, a thickness of the connecting part is less than a dimension of the sliding gap, and a thickness of the first sliding part is more than or equal to the dimension of the sliding gap.

According to an embodiment of the present invention, a sliding gap exists between the second pipe body and the first pipe body, interference fit is realized between the first slider and the sliding gap, and clearance fit is realized between the connecting part and the second pipe body.

According to an embodiment of the present invention, a first boss is disposed on a side of the first slider facing towards the first pipe body, and multiple first slotted holes for accommodating the first bosses are disposed on an end of the inner wall of the first pipe body.

According to an embodiment of the present invention, when the first sliding part is not mounted into the first pipe body, a gap exists between the first boss and the inner wall opposite to the first boss of the first pipe body.

According to an embodiment of the present invention, the first slotted holes do not penetrate the inner wall of the first pipe body.

According to an embodiment of the present invention, a side of each first slotted hole facing away from the flange edge is provided with a chamfered surface, and a side of the first slotted hole close to the flange edge abuts against the first boss.

According to an embodiment of the present invention, a side of the first boss facing away from the flange edge has a guide slope, and the guide slope is configured for guiding the first pipe body when the first sliding part is not mounted into the first pipe body.

According to an embodiment of the present invention, multiple the first sliders is arranged along a circumferential direction of the second pipe body.

According to an embodiment of the present invention, multiple the second sliders is arranged along a circumferential direction of the second pipe body.

According to an embodiment of the present invention, the first sliding part is an annular structure, an unclosed C-shaped annular structure, or is formed by splicing two opposite half rings.

According to an embodiment of the present invention, a mounting method according to the above sliding structure includes the following steps: step 1, vertically placing the second pipe body on an operating platform, so that an end of the second pipe body equipped with second slotted holes faces upwards; step 2, sleeving the first sliding part on the second pipe body from top to bottom, so that the clamping part abuts against an upper end of the second pipe body, and meanwhile the first sliders are inclined towards an inside of the second pipe body, so that the first sliding part is clamped on the end of the second pipe body; step 3, placing the second sliding part inside the second slotted holes; step 4: sleeving the first pipe body on an outer surface of the first slider from top to bottom, and a lower end of the first pipe body abuts against the flange edge during the downward movement of the first pipe body and drives the first sliding part to move downwards, so that the first sliding part enters the gap between the first pipe body and the second pipe body, and meanwhile the first bosses snap into the first slotted holes.

According to an embodiment of the present invention, a mounting method of the sliding structure includes the following steps: step 1, sleeving the first sliding part on the second pipe body, and fixing the second sliding part on the second pipe body; step 2, moving the first sliding part until the first sliding part is engaged with the second sliding part, so that the first sliding part is fixed on the second pipe body; step 3, sleeving the first pipe body on an outer surface of the first sliding part to make the first pipe body press the first sliding part to bend and deform towards the inside of the second pipe body, so that the first pipe body is sleeved on the first sliding part conveniently; step 4: pushing the first pipe body to the second pipe body. When an end of the first pipe body abuts against the flange edge, a side of the first sliding part is clamped on the inner wall of the first pipe body, and then the first pipe body drives the first sliding to depart from the second sliding part, so that the first sliding part and the second sliding part detach from each other.

An actuator including the sliding structure as described above; a box body, where a driving part is disposed inside and which is fixedly connected to one end of the sliding structure; a screw rod assembly, disposed in the sliding structure and containing a hollow transmission rod, a screw rod and a nut. One end of the hollow transmission rod is connected to a rotating end of the driving part; the other end of the hollow transmission rod is fixedly connected to the nut; the screw rod is disposed inside the hollow transmission rod; an outer peripheral surface of the screw rod is engaged with the nut through threads; an end of the screw rod far from the box body is connected to the other end of the sliding structure; and the driving part is configured to drive the sliding structure to perform retractable motion by the screw rod assembly.

According to an embodiment of the present invention, the end of the screw rod facing away from the box body is directly connected to a bottom plate, an outer peripheral surface of the bottom plate is fixedly connected to an inner wall of the second pipe body, and the box body is fixedly connected to the first pipe body.

According to an embodiment of the present invention, the end of the screw rod facing away from the box body is directly connected to a bottom plate, an outer peripheral surface of the bottom plate is fixedly connected to the inner wall of the first pipe body, and the box body is fixedly connected to the second pipe body.

According to an embodiment of the present invention, the sliding structure further includes a third pipe body which is slidable sleeved on the first pipe body, and structures between the third pipe body and the first pipe body is the same as those between the first pipe body and the second pipe body.

Other features and advantages of the present invention will be set forth in the specification that follows, and in part will be obvious from the specification, or may be learned by practice of the present invention. The objects and other advantages of the present invention are realized and obtained by the structure particularly pointed out in the specification, claims and drawings.

In order to make the above objects, features and advantages of the present invention more obvious and understandable, the following preferred embodiments will be described in detail with reference to the attached drawings.

### BRIEF DESCRIPTION OF DRAWINGS

The above and/or additional aspects and advantages of the present invention will become apparent and easy to understand from the description of embodiments in the following drawings, in which:
FIG. 1 is a schematic sectional structure diagram of an actuator according to the present invention;
FIG. 2 is a structure diagram exploded-view of the actuator according to the present invention;
FIG. 3 is a schematic mounting diagram of a sliding structure according to Embodiment 1 of the present invention;
FIG. 4 is a schematic mounting diagram of the sliding structure according to Embodiment 1 of the present invention;
FIG. 5 is an enlarged schematic diagram of components at a position E in FIG. 4;
FIG. 6 is a schematic mounting diagram of the sliding structure according to Embodiment 1 of the present invention;
FIG. 7 is an enlarged schematic diagram of components at a position F in FIG. 6;
FIG. 8 is a structural diagram of a first sliding part in the sliding structure according to Embodiment 1 of the present invention;
FIG. 9 is a structural diagram of a second sliding part in the sliding structure according to Embodiment 1 of the present invention;
FIG. 10 is a structural diagram of a second sliding part according to Embodiment 2 of the present invention;
FIG. 11 is a structural diagram of a first sliding part according to Embodiment 2 of the present invention;
FIG. 12 is a schematic diagram of the sliding structure in Embodiment 2 of the present invention during mounting;
FIG. 13 is an enlarged schematic diagram of components at a position B in FIG. 12;
FIG. 14 is a schematic diagram of the sliding structure of the present invention during mounting;
FIG. 15 is an enlarged schematic diagram of components at a postion C in FIG. 14;
FIG. 16 is a schematic diagram of the sliding structure in Embodiment 2 of the invention during mounting;
FIG. 17 is an enlarged schematic diagram of components at a position D in FIG. 16;
FIG. 18 is a second structural schematic diagram of the first sliding part in the sliding structure according to the present invention;
FIG. 19 is a third structural schematic diagram of the first sliding part in the sliding structure according to the present invention;
FIG. 20 is a schematic sectional structural diagram of a second actuator according to the present invention; and
FIG. 21 is a schematic sectional structural diagram of a third actuator according to the present invention.

Reference numbers:
Driving part 1, box body 2, screw rod assembly 3, second pipe body 4, first pipe body 5, first sliding part 6, second sliding part 7, second slotted hole 8, bottom plate 9, first slotted hole 10, chamfered surface 11, third pipe body 12, hollow transmission rod 31, screw rod 32, nut 33, flange edge 61, first slider 62, first boss 63, bayonet 64, clamping part 64a, connecting part 65, second slider 71, second boss 72, and clamping tooth 73.

### DETAILED DESCRIPTION OF EMBODIMENTS

For the embodiments of the present invention described in detail below, examples are shown in the accompanying drawings, in which the same or similar reference numerals throughout refer to the same or similar elements or elements with the same or similar functions. The embodiments described below with reference to the accompanying drawings are exemplary, only for explaining the present invention, and should not be construed as limiting the present invention.

In the description of the present invention, it should be understood that, terms such as center, longitudinal, transverse, length, width, thickness, above, below, front, back, left, right, vertical, horizontal, top, bottom, inside, outside, clockwise, anticlockwise, axial, radial, and circumferential are only for the convenience of describing the present invention and simplifying the description, and it is not intended to indicate or imply that the referred devices or elements must have a specific orientation, or be constructed and operated in a specific orientation, therefore should not be construed as limiting the present invention. In addition, the features defined with "first" and "second" may include one or more of these features explicitly or implicitly. In the description of the present invention, "a plurality" means two or more, unless otherwise stated.

In the description of the present invention, it should be noted that unless otherwise specified and limited, the terms "mounted" and "connected" should be understood in a broad sense. For example, they can be fixedly connected, dismountable connected or integrally connected; they can be mechanically connected or electrically connected; they can be directly connected or indirectly connected through an intermediate medium, or internally connected. For those skilled in the art, the specific meanings of the above terms in the present invention can be understood according to specific situations.

The sliding structure, mounting method and actuator of the embodiment of the present invention are described in detail below with reference to the drawings.

### Embodiment 1

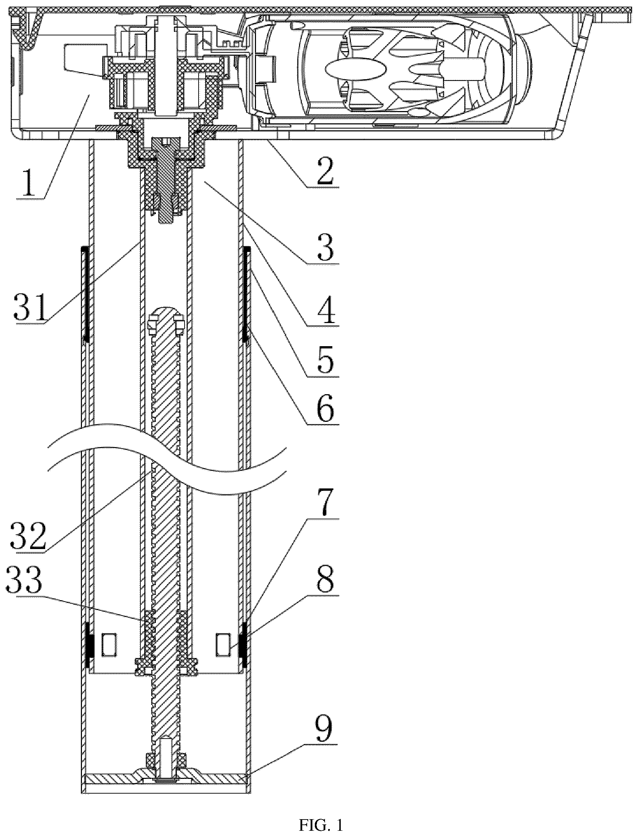

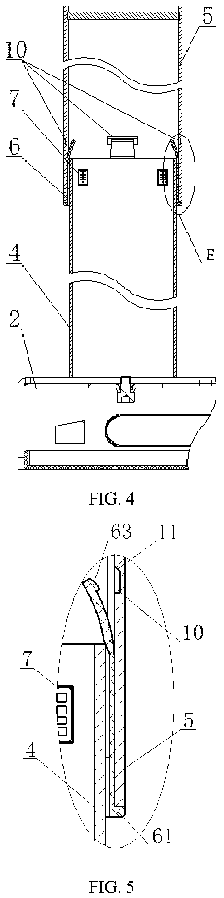

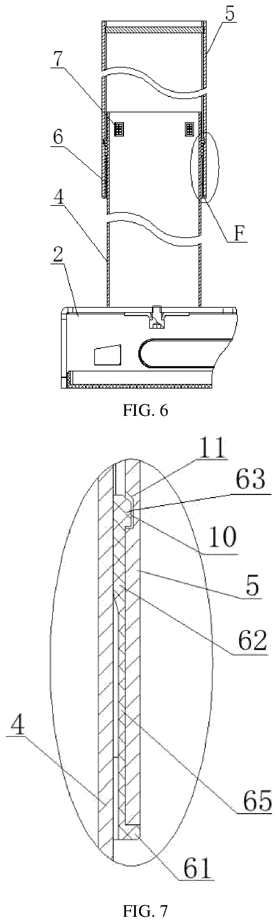

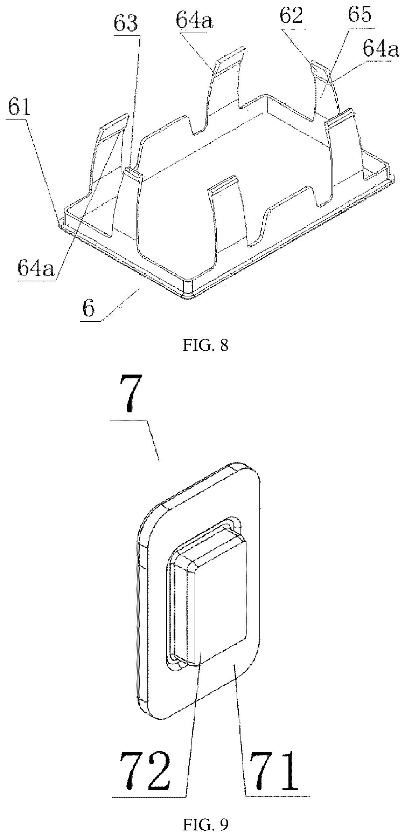

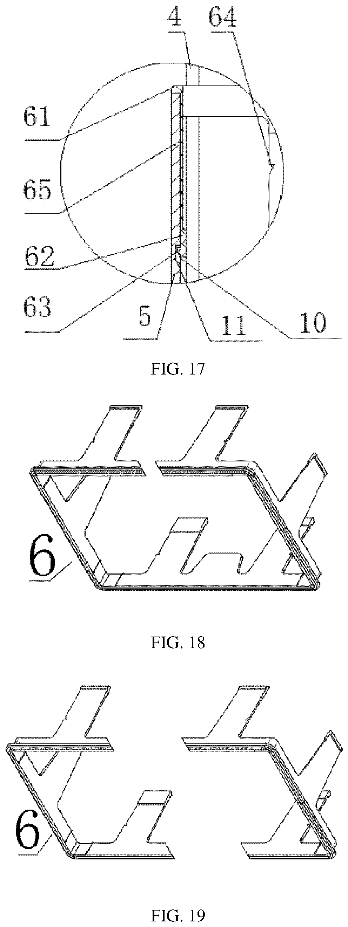

As shown in FIG. 1, FIG. 2, FIG. 3, FIG. 4, FIG. 5, FIG. 6, FIG. 7, FIG. 8, FIG. 9, FIG. 18, and FIG. 19, the present invention discloses a sliding structure, which comprises a first pipe body 5, a second pipe body 4, a second sliding part 7 and a first sliding part 6, where the second pipe body 4 is slidably arranged in the first pipe body 5; one side of the second sliding part 7 is clamped on an outer wall of the second pipe body 4, and the other side of the second sliding part 7 is slidably connected with the inner wall of the first pipe body 5. When the first sliding part 6 is not mounted into the first pipe body 5, a part of the first sliding part 6 extends beyond the end of the second pipe body 4, and the first sliding part 6 is directly clamped on the second pipe body 4. When the first sliding part 6 is mounted into the first pipe body 5, the first sliding part 6 is detached from the end of the second pipe body 4, one side of the first sliding part 6 is clamped on the inner wall of the first pipe body 5, and the other side of the first sliding part 6 is slidable connected with the outer wall of the second pipe body 4.

In other words, the first pipe body 5 is slidable applied on the second pipe body 4, and the first sliding part 6 and the second sliding part 7 are arranged between the first pipe body 5 and the second pipe body 4, so that the contact-free sliding between the first pipe body 5 and the second pipe body 4 can be achieved. The first sliding part 6 and the first pipe body 5 are relatively fixed, and the second sliding part 7 and the second pipe body 4 are relatively fixed. When the first pipe body 5 and the second pipe body 4 are extended, the distance between the first sliding part 6 and the second sliding part 7 becomes shorter. When the first pipe body 5 and the second pipe body 4 contract, the distance between the first sliding part 6 and the second sliding part 7 becomes longer. The cross sections of the first pipe body 5 and the second pipe body 4 are rectangular shapes, or other shapes, such as round, square and oval shapes.

According to the present invention, the pocket holes required for mounting the first sliding part 6 are reduced in quantity, which reduces the production cost, improves the service strength of the pipe wall, and avoids the deformation of the pipe wall. When mounting the first sliding part 6, by directly clamping the first sliding part 6 on the second pipe body 4, part of the first sliding part 6 extends beyond the end of the second pipe body 4, and no additional positioning tool is needed to fix the first sliding part 6. At the same time, by using a space outside the end of the second pipe body 4, a part of the first sliding part 6 is inclined inwards (it can be directly formed or inclined inward by external force), so that an outer diameterof the first sliding part 6 is smaller than a diameter of the inner wall of the opposite first pipe body 5, thus being smoothly mounted into the first pipe body 5, reducing the processing and assembly costs and improving the assembly efficiency.

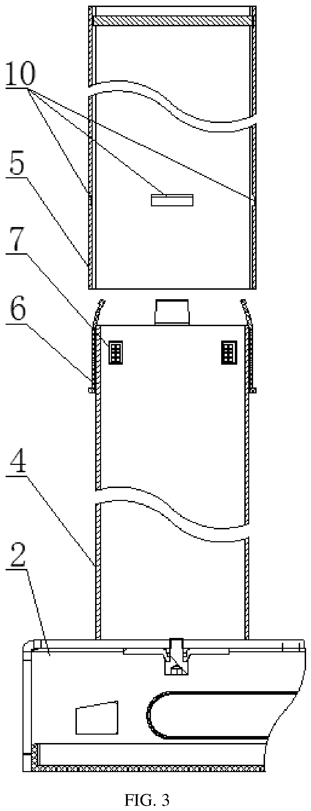

As shown in FIG. 3, FIG. 4, FIG. 5, FIG. 6, FIG. 7, and FIG. 8, the first sliding part 6 includes a connecting part 65, a flange edge 61 and multiple first sliders 62, and the connecting part 65 is disposed between the second pipe body 4 and the first pipe body 5. The flange edge 61 is disposed at one end of the connecting part 65, and abuts against an end face of the first pipe body 5. Multiple first sliders 62 are connected to the other end of the connecting part 65. That is, the flange edge 61 and the first slider 62 are connected by the connecting part 65, the first slider 62 is located between the second pipe body 4 and the first pipe body 5 for sliding guidance, the flange edge 61 is located at the end of the first pipe body 5, and the plane of the flange 61 is perpendicular to the axis of the first pipe body 5, which is convenient for the first pipe body 5 to push the flange 61, thus driving the first sliding part 6 to do motion.

Preferably, when the first sliding part 6 is directly clamped on the second pipe body 4, the first slider 62 is inclined towards the inside of the second pipe body 4, and the first slider 62 extends beyond the end of the second pipe body 4, so that the first sliding part 6 is clamped on the end of the second pipe body 4. In other words, when the first sliding part 6 is in a natural state, the first slider 62 is inclined inwards, and when the first slider 6 is mounted on the second pipe body 4, the connecting part 65 is applied on the second pipe body 4, and the inner circumference of the first slider 62 formed after the inclination is less than the outer circumference of the second pipe body 4, so that the first slider 62 extends beyond the end of the second pipe body 4, and then the first sliding part 6 is clamped on the end of the second pipe body 4.

Furthermore, a clamping part 64a is disposed between the first slider 62 and the connecting part 65, and the clamping part 64a faces the second pipe body 4. When the first sliding part 6 is not mounted into the first pipe body 5, the clamping part 64a abuts against the end of the second pipe body 4. Furthermore, the clamping part 64a is a transition surface, one end of which is connected to the first slider 62, and the other end of which is connected to the connecting part 65. That is, the clamping part 64a can be any structure that can be clamped on the end of the second pipe body 4, preferably a transition surface, and the transition surface can be a curved surface or an inclined surface, thus facilitating the first slider 62 to enter the sliding gap.

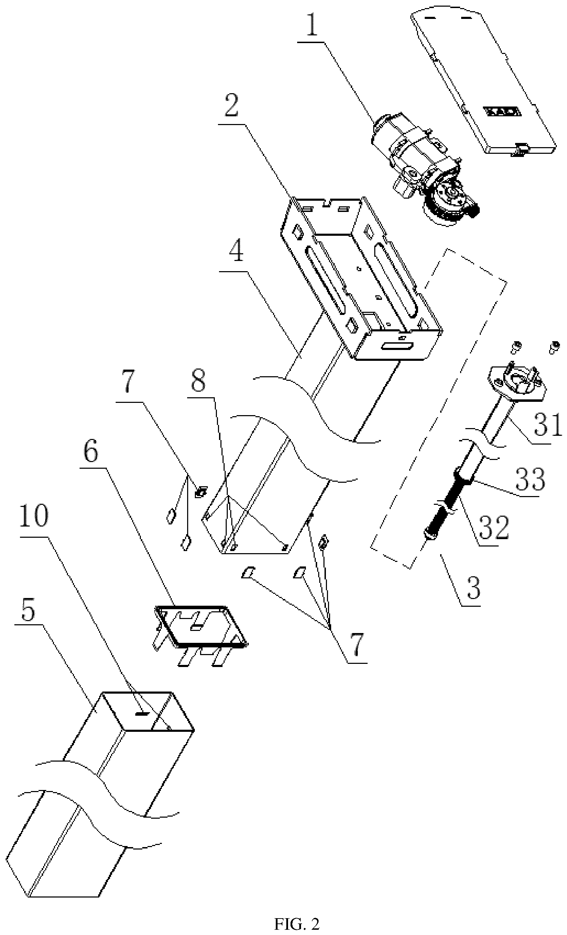

As shown in FIG. 2, FIG. 3, FIG. 4, FIG. 6 and FIG. 9, one end of the outer wall of the second pipe body 4 is provided with multiple second slotted holes 8, the second sliding part 7 includes second bosses 72 and second sliders 71, and the second boss 72 is clamped in the second slotted holes 8. The second slider 71 is connected to the second boss 72, and the second slider 71 is slidable connected to the first pipe body 5. By the snap fit between the second boss 72 and the second slotted hole 8, the second sliding part 7 can be conveniently mounted on the second pipe body 4.

Preferably, multiple first sliders 62 are arranged in the circumferential direction of the second pipe body 4, and multiple second sliders 71 are arranged in the circumferential direction of the second pipe body 4. That is, the first slider 62 and the second slider 71 are arranged around the second pipe body 4 at the same time to ensure that the gap between the second pipe body 4 and the first pipe body 5 in the circumferential direction is uniform during sliding, so that the sliding process is smoother.

According to an embodiment of the present invention, a sliding gap exists between the second pipe body 4 and the first pipe body 5, the thickness of the connecting part 65 is less than a dimension of the sliding gap, and the thickness of the first slider 62 is more than or equal to the dimension of the sliding gap. Furthermore, interference fit is realized between the first slider 62 and the sliding gap, and clearance fit is realized between the connecting part 65 and the second pipe body 4. In other words, the second pipe body 4 and the first pipe body 5 are slidable connected by the first slider 62 and the second slider 71, and the thickness of the first slider 62 and the second slider 71 is more than or equal to the dimension of the sliding gap between the second pipe body 4 and the first pipe body 5. Preferably, the thickness of the first slider 62 and the second slider 71 is slightly more than the dimension of the sliding gap, so that interference fit can be realized between the first slider 62 and the second slider 71 with the sliding gap during sliding, thus the second pipe body 4 and the first pipe body 5 do not shake when sliding. The thickness of the connecting part 65 is less than the dimension of the sliding gap, and a gap exists between the connecting part 65 and the second pipe body 4, so the connecting part 65 is thinner, and a movable space exists between the connecting part 65 and the second pipe body 4. On the one hand, it is convenient for the first sliding part 6 to be easily applied on the second pipe body 4. On the other hand, when the first sliding part 6 is mounted into the first pipe body 5, the connecting part 65 can be deformed. Because of the small thickness and the movable space between the first pipe body 5 and the second pipe body 4, the connecting part 65 is easily deformed inwards to dodge the first pipe body 5 during mounting, thus facilitating the first pipe body 5 to be applied on the second pipe body 4.

Furthermore, the first slider 62 is equipped with a first boss 63 on the side facing the first pipe body 5, and one end of the inner wall of the first pipe body 5 is provided with multiple first slotted holes 10 for accommodating the first bosses 63. Furthermore, the side of the first slotted hole 10 facing away from the flange edge 61 forms a chamfered surface 11, and the side of the first slotted hole 10 close to the flange edge 61 abuts against the first boss 63. In other words, the flange edge 61 abuts against the first pipe body 5, thus forming the first limit point, and the first boss 63 is clamped in the first slotted hole 10, thus forming the second limit point. As the first sliding part 6 passes through the upper limit point and the lower limit point in the sliding gap, the first sliding part 6 is always fixed at the end of the first pipe body 5 during sliding, thus preventing the first sliding part 6 from naturally falling off or being pulled out from the second pipe body after working for a long time.

Preferably, when the first sliding part 6 is not mounted into the first pipe body 5, a gap exists between the first boss 63 and the inner wall opposite to the first boss 63 of the first pipe body 5. That is, when the first slider 62 is inclined towards the inside of the second pipe body 4, the first boss 63 is inclined towards the inside of the second pipe body 4, so that a certain distance exists between the inner wall of the first pipe body 5 and the first boss 63 during mounting, which makes it easier for the first pipe body 5 to be applied on the first sliding part 6.

According to one embodiment of the present invention, the first slotted hole 10 does not penetrate the inner wall of the first pipe body 5, and after the mounting, the exposed surface of the first pipe body 5 remains intact, which improves the aesthetic feeling of use.

According to one embodiment of the present invention, the first sliding part 6 is an annular structure, an unclosed C-shaped annular structure, or is formed by splicing two opposite half rings. The first sliding part 6 can be designed according to the actual needs, so as to improve the adaptability. It is suitable to use wear-resistant plastic to make the first sliding part 6 and the second sliding part 7, which can be directly injection molded.

According to one embodiment of the present invention, the side of the first slotted hole 10 facing away from the flange edge 61 forms a chamfered surface 11, and the side of the first slotted hole 10 close to the flange edge 61 abuts against the first boss 63. In this way, even if the first slotted hole 10 extends widthwise to the area of the second sliding part 7, the chamfered surface 11 will not scratch the surface of the second slider 71 during assembly.

As shown in FIG. 3, FIG. 4, FIG. 5, FIG. 6, and FIG. 7, the present invention also provides a mounting method according to the sliding structure, which includes the following steps: step 1, vertically placing the second pipe body 4 on the operating platform, so that the end of the second pipe body 4 with the second slotted hole 8 faces upwards; step 2: sleeving the first sliding part 6 on the second pipe body 4 from top to bottom, so that the clamping part 64a abuts against the upper end of the second pipe body 4, and the first slider 62 is inclined towards the inside of the second pipe body 4, so that the first sliding part 6 is clamped on the end of the second pipe body 4; step 3, placing the second sliding part 7 in the second slotted hole 8; step 4: sleeving the first pipe body 5 on the outer surface of the first sliding part 6 from top to bottom. During the downward movement of the first pipe body 5, the lower end of the first pipe body 5 abuts against the flange edge 61, and the first sliding part 6 is driven to move downwards, so that the first slider 62 enters the gap between the first pipe body 5 and the second pipe body 4, and meanwhile the first boss 63 snaps into the first slotted hole 10. That is, the second sliding part 7 is mounted and positioned by using the second slotted hole 8, and the first sliding part 6 makes use of its elastic deformability, and the clamping part 64a abuts against the upper end of the second pipe body 4, while the first slider 62 is inclined inwards, so that there will be no interference when mounting the first pipe body 5. During the downward mounting of the first pipe body 5, the first sliding part 6 achieves self-positioning, and the lower end of the first pipe body 5 abuts against the flange edge 61, and then directly moves downwards, so that the first slider 62 automatically aligns and enters the gap between the first pipe body 5 and the second pipe body 4, and the mounting process is convenient and quick.

### Embodiment 2

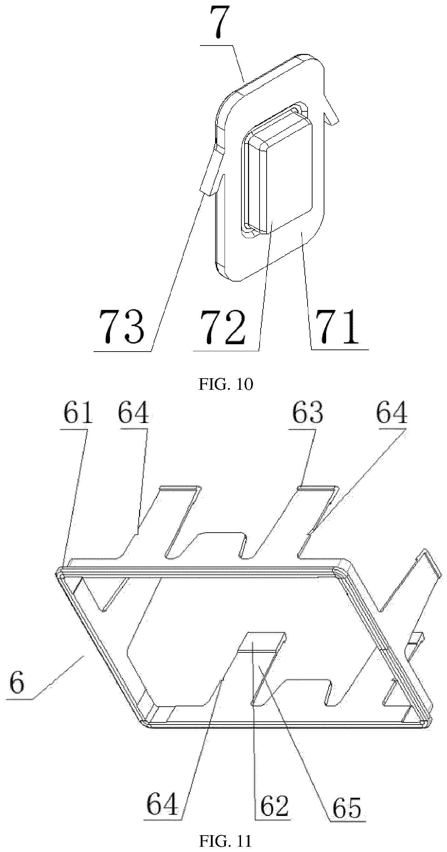

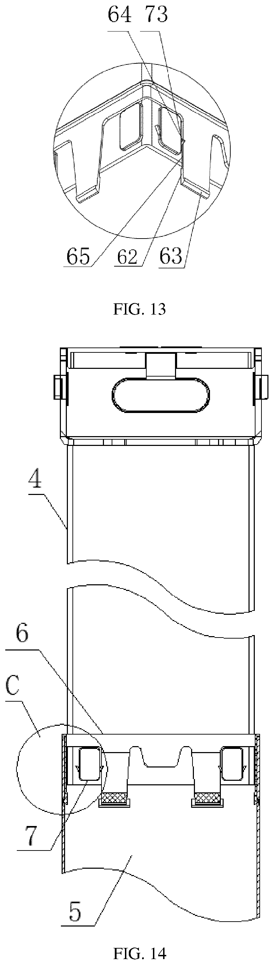

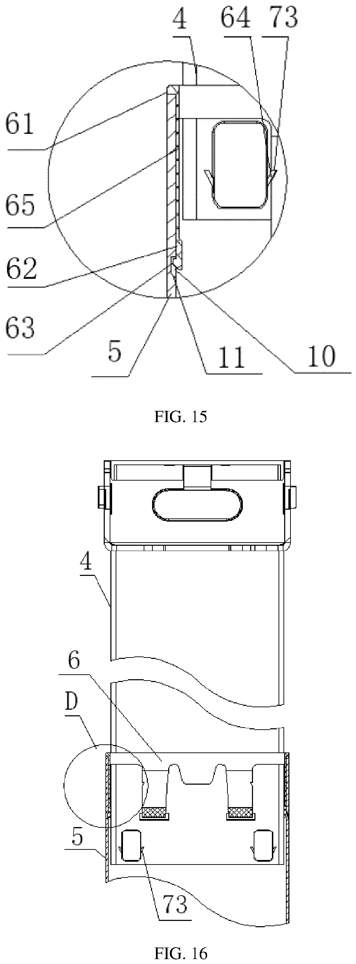

As shown in FIG. 10, FIG. 11, FIG. 12, FIG. 13, FIG. 14, FIG. 15, FIG. 16, FIG. 17, FIG. 18, and FIG. 19, the present invention discloses a sliding structure, which includes a first pipe body 5, a second pipe body 4, a second sliding part 7 and a first sliding part 6, where the second pipe body 4 is slidable disposed in the first pipe body 5. One side of the second sliding part 7 is clamped on the outer wall of the second pipe body 4, and the other side of the second sliding part 7 is slidable connected to the inner wall of the first pipe body 5. When the first sliding part 6 is not mounted into the first pipe body 5, part of the first sliding part 6 extends beyond the end of the second pipe body 4, and the first sliding part 6 is indirectly clamped on the second pipe body 4 by the second sliding part 7. When the first sliding part 6 is mounted into the first pipe body 5, the first sliding part 6 is detached from the end of the second pipe body 4, one side of the first sliding part 6 is clamped on the inner wall of the first pipe body 5, and the other side of the first sliding part 6 is slidable connected to the outer wall of the second pipe body 4.

In other words, the first pipe body 5 is slidable applied on the second pipe body 4, and the first sliding part 6 and the second sliding part 7 are arranged between the first pipe body 5 and the second pipe body 4, so that the contact-free sliding between the first pipe body 5 and the second pipe body 4 can be achieved. The first sliding part 6 and the first pipe body 5 are relatively fixed, and the second sliding part 7 and the second pipe body 4 are relatively fixed. When the first pipe body 5 and the second pipe body 4 are extended, the distance between the first sliding part 6 and the second sliding part 7 becomes shorter. When the first pipe body 5 and the second pipe body 4 contract, the distance between the first sliding part 6 and the second sliding part 7 becomes longer. The cross sections of the first pipe body 5 and the second pipe body 4 are rectangular shapes, or other shapes, such as round, square and oval shapes.

According to the present invention, the pocket holes required for mounting the first sliding part 6 are reduced in quantity, which reduces the production cost, improves the service strength of the pipe wall, and avoids the deformation of the pipe wall. When the first sliding part 6 is mounted into the first pipe body 5, the first sliding part 6 is indirectly clamped on the second pipe body 4 through the second sliding part 7, and part of the first sliding part 6 extends beyond the end of the second pipe body 4, so no additional positioning tool is needed to fix the first sliding part 6. At the same time, the inner space outside the end of the second pipe body 4 is used to make part of the first sliding part 6 be inclined inwards (it can be directly formed or inclined inward by external force), so that it is smaller than the inner wall of the opposite first pipe body 5, thus being smoothly mounted in the first pipe body 5, reducing the processing and assembly costs and improving the assembly efficiency.

As shown in FIG. 11, FIG. 12, FIG. 13, FIG. 14, FIG. 15, FIG. 16, and FIG. 17, the first sliding part 6 includes a connecting part 65, a flange edge 61 and multiple first sliders 62, and the connecting part 65 is disposed between the second pipe body 4 and the first pipe body 5. The flange edge 61 is disposed at one end of the connecting part 65, and abuts against the end face of the first pipe body 5. Multiple first sliders 62 are connected to the other end of the connecting part 65. That is, the flange edge 61 and the first slider 62 are connected by the connecting part 65, the first slider 62 is located between the second pipe body 4 and the first pipe body 5 for sliding guidance, the flange edge 61 is located at the end of the first pipe body 5, and the plane of the flange edge 61 is perpendicular to the axis of the first pipe body 5, which is convenient for the first pipe body 5 to push the flange 61, thus driving the first sliding part 6 to move.

As shown in FIG. 10, FIG. 12, FIG. 13, FIG. 14, FIG. 15, and FIG. 16, one end of the outer wall of the second pipe body 4 is provided with multiple second slotted holes 8, the second sliding part 7 includes a second bosses 72 and second sliders71, and the second bosses 72 are clamped in the second slotted holes 8. The second sliders 71 are connected to the second bosses 72, and the second slider 71 is slidable connected to the first pipe body 5. By the snap fit between the second bosses 72 and the second slotted holes 8, the second sliding part 7 can be conveniently mounted on the second pipe body 4.

Preferably, when the first sliding part 6 is indirectly clamped on the second pipe body 4, the connecting part 65 is engaged with the second sliding part 7, and the first slider 62 extends beyond the end of the second pipe body 4. In other words, since the second sliding part 7 is clamped with the second slotted holes 8 by the second bosses 72, the connecting part 65 of the first sliding part 6 is engaged with the second sliding part 7, and the first slider 62 is disposed outside the end of the second pipe body 4, so that the first slider 62 can dodge inwards when the first pipe body 5 is being mounted.

Furthermore, the second sliding part 7 is equipped with a clamping tooth 73/clamping teeth 73, and the connecting part 65 is equipped with a bayonet 64/bayonets 64 matching the clamping tooth 73/ clamping teeth 73. When the first sliding part 6 is not mounted into the first pipe body 5, the clamping tooth 73 is engaged with the bayonet 64. On the other hand, the bayonet 64 can be arranged on one side of the second slider 71, and the clamping tooth 73 are arranged on the connecting part 65. After the positions of the bayonet 64 and the clamping tooth 73 are interchanged, the engagement during assembly can still be realized.

Furthermore, the cross section of the bayonet 64 is a L-shaped structure, and the bayonet 64 includes a stop wall and an escape wall, which are connected to form a L-shaped structure. The stop wall is located at the side of the bayonet 64 close to the flange edge 61, an acute angle is formed between the stop wall and the escape wall. The clamping tooth 73 is a rod-shaped protrusion inclined to the bayonet 64. When the first sliding part 6 is not mounted into the first pipe body 5, the bottom surface of the rod-shaped protrusion abuts against the stop wall, and the side surface of the rod-shaped protrusion abuts against the escape wall. That is, the bayonet 64 is equipped with a stop wall and an escape wall, and the clamping tooth 73 is an inclined rod-shaped protrusion. After the bottom surface of the rod-shaped protrusion abuts against the stop wall, it can stop the first sliding part 6 from moving along the axial direction of the second pipe body 4, while the escape wall abuts against the side surface of the rod-shaped protrusion. The two abutting surfaces are inclined planes and form an acute angle with the axial direction of the second pipe body 4. In this way, when the first sliding part 6 is away from the second sliding part 7 along the axial direction of the second pipe body 4, the clamping tooth 73 can slide out of the bayonet 64 along the side surface of the escape wall or rod-shaped projection, which makes the first sliding part 6 easily be detached from the second sliding part 7.

Preferably, multiple first sliders 62 are arranged along the circumferential direction of the second pipe body 4, and multiple second sliders 71 are arranged along the circumferential direction of the second pipe body 4. That is, the first slider 62 and the second slider 71 are arranged around the second pipe body 4 at the same time to ensure that the gap between the second pipe body 4 and the first pipe body 5 in the circumferential direction is uniform during sliding, so that the sliding process is smoother.

According to an embodiment of the present invention, a sliding gap exists between the second pipe body 4 and the first pipe body 5, a thickness of the connecting part 65 is less than a dimension of the sliding gap, and a thickness of the first slider 62 is more than or equal to the dimension of the sliding gap. Furthermore, interference fit can be realized between the first slider 62 and the sliding gap, and clearance fit can be realized between the connecting part 65 and the second pipe body 4. In other words, the second pipe body 4 and the first pipe body 5 are slidable connected by the first slider 62 and the second slider 71, and the thickness of the first slider 62 and the second slider 71 is more than or equal to the dimension of the sliding gap between the second pipe body 4 and the first pipe body 5. Preferably, the thickness of the first slider 62 and the second slider 71 is slightly more than the dimension of the sliding gap, so that interference fit can be realized between the first slider 62 and the second slider 71 with the sliding gap during sliding, thus the second pipe body 4 and the first pipe body 5 do not shake when sliding. The thickness of the connecting part 65 is less than the dimension of the sliding gap, and a gap exists between the connecting part 65 and the second pipe body 4, so the connecting part 65 is thinner, and a movable space exists between the connecting part 65 and the second pipe body 4. to facilitate the first sliding part 6 to be easily applied on the second pipe body 4 on the one hand; on the other hand, when the first sliding part 6 is mounted into the first pipe body 5, the connecting part 65 can be deformed. Because of its small thickness and the movable space between the connecting part 65 and the second pipe body 4, when the first pipe body 5 is mounted, the connecting part 65 is easily deformed inwards to avoid it, thus facilitating the first pipe body 5 to be applied on the second pipe body 4.

Furthermore, the first slider 62 is provided with a first boss 63 on the side facing towards the first pipe body 5, and the end of the inner wall of the first pipe body 5 is provided with multiple first slotted holes 10 for accommodating the first bosses 63. Furthermore, the side of the first slotted hole 10 facing away from the flange edge 61 forms a chamfered surface 11, and the side of the first slotted hole 10 close to the flange edge 61 abuts against the first boss 63. In other words, the flange edge 61 abuts against the first pipe body 5, thus forming the first limit point, and the first boss 63 is clamped in the first slotted hole 10, thus forming the second limit point. As the first sliding part 6 passes through the upper limit point and the lower limit point in the sliding gap, the first sliding part 6 is always fixed on the end of the first pipe body 5 during sliding, thus preventing the first sliding part 6 from naturally falling off or being pulled out from the second pipe body after working for a long time.

Preferably, the side of the first boss 63 away from the flange 61 has a guide slope, which is used to guide the first pipe body 5 when the first sliding part 6 is not mounted into the first pipe body 5. That is, when the first pipe body 5 is applied, the first boss 63 partially coincide with the first pipe body 5 in the sliding direction, and the guide slope is disposed to facilitate the end of the first pipe body 5 to be applied on the first sliding part 6 along the guide slope, thus improving the mounting convenience.

More preferably, when the first sliding part 6 is not mounted into the first pipe body 5, the first slider 62 can be inclined to the inner space other than the end of the second pipe body 4 by direct shaping or external force, so that a gap exists between the first boss 63 and the inner wall opposite to the first boss 63 of the first pipe body 5. That is, when the first slider 62 is inclined towards the inside of the second pipe body 4, the first boss 63 is inclined to the inside of the second pipe body 4, so that a certain distance exists between the inner wall opposite to the first boss 63 of the first pipe body 5 and the first boss 63 during mounting, which makes it easier for the first pipe body 5 to be applied on the first sliding part 6. For the scheme of directly shaping the first slider 62 to be inclined inwards, please refer to Embodiment 1. It is worth noting that the method of tilting the first slider 62 to the side by external force can be directly pressed manually, or the first slider 62 can be pressed inwards by using a small tool, so that the first slider 62 can keep the inward tilting/slow recovery state in a short period of time (for example, tens of seconds to minutes). This can be achieved by selecting plastic materials or structural design with slow recovery features, which will not go into details here.

According to an embodiment of the present invention, the first slotted hole 10 does not penetrate the inner wall of the first pipe body 5, and after the mounting, the exposed surface of the first pipe body 5 remains intact, which improves the aesthetic feeling.

According to an embodiment of the present invention, the first sliding part 6 has a ring structure, or an unclosed C-shaped ring structure, or is formed by splicing two opposite half rings. The first sliding part 6 can be designed according to the actual needs, so as to improve the adaptability. It is suitable to use wear-resistant plastic to make the first sliding part 6 and the second sliding part 7, which can be directly injection molded.

According to an embodiment of the present invention, the side of the first slotted hole 10 facing away from the flange edge 61 forms a chamfered surface 11, and the side of the first slotted hole 10 close to the flange edge 61 abuts against the first boss 63. In this way, even if the first slotted hole 10 extends widthwise to the area of the second sliding part 7, the chamfered surface 11 will not scratch the surface of the second slider 71 during assembly.

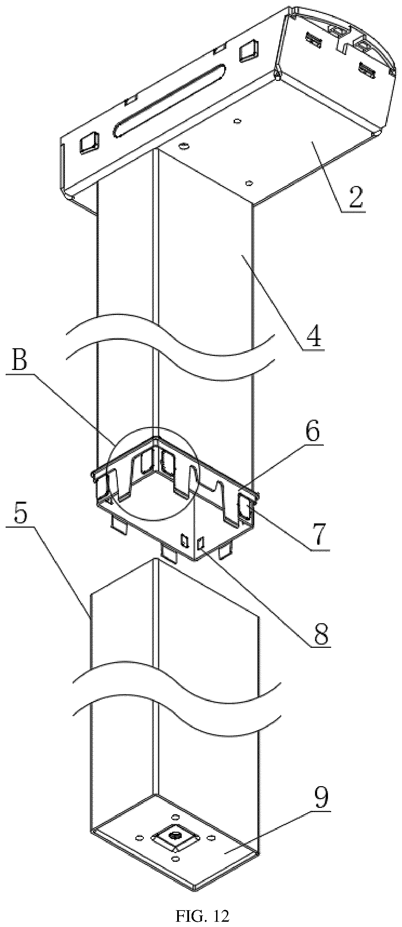

As shown in FIG. 12, FIG. 13, FIG. 14, FIG. 15, FIG. 16, and FIG. 17, the present invention also provides an assembly method according to the above sliding structure, which includes the following steps: step 1, sleeving the first sliding part 6 on the second pipe body 4, and fixing the second boss 72 on the second sliding part 7 in the second slotted hole 8; step 2; moving the first sliding part 6 until the clamping tooth 73 is engaged with the bayonet 64, so that the first sliding part 6 is fixed on the second pipe body 4; step 3: sleeving the first pipe body 5 on the outer surface of the first sliding part 6, and the first pipe body 5 is guided by the guide slope of the first boss 63, which presses the first boss 63 and the first slider 62 to bend and deform towards the inside of the second pipe body 4, so that the first pipe body 5 can be applied on the first sliding part 6; step 4: pushing the first pipe body 5 to the second pipe body 4. When the end of the first pipe body 5 abuts against the flange edge 61, one side of the first sliding part 63 snaps into the inner wall of the first pipe body 10, and then the first pipe body 5 drives the first sliding part to depart from the second sliding part 7, so that the first bayonet 64 and the second clamping tooth 73 detach from each other.

### Embodiment 3

As shown in FIG. 1 and FIG. 2, the present invention also provides an actuator, which includes the sliding structure as described above; a box body 2, inside which the driving part 1 is disposed, and the box body 2 is fixedly connected with one end of the sliding structure; a screw rod assembly 3 which is arranged in the sliding structure. The screw rod assembly 3 includes a hollow transmission rod 31, a screw rod 32 and a nut 33. One end of the hollow transmission rod 31 is coaxially connected to the rotating end of the driving part 1, and the other end of the hollow transmission rod 31 is fixedly connected with the nut 33. The screw rod 32 is disposed inside the hollow transmission rod 31, and the outer peripheral surface of the screw rod 32 is engaged with the nut 33 by threads. the end of the screw rod 32 facing away from the box body 2 is connected to the other end of the sliding structure, and the driving part 1 drives the sliding structure to do retractable motion by the screw rod assembly 3.

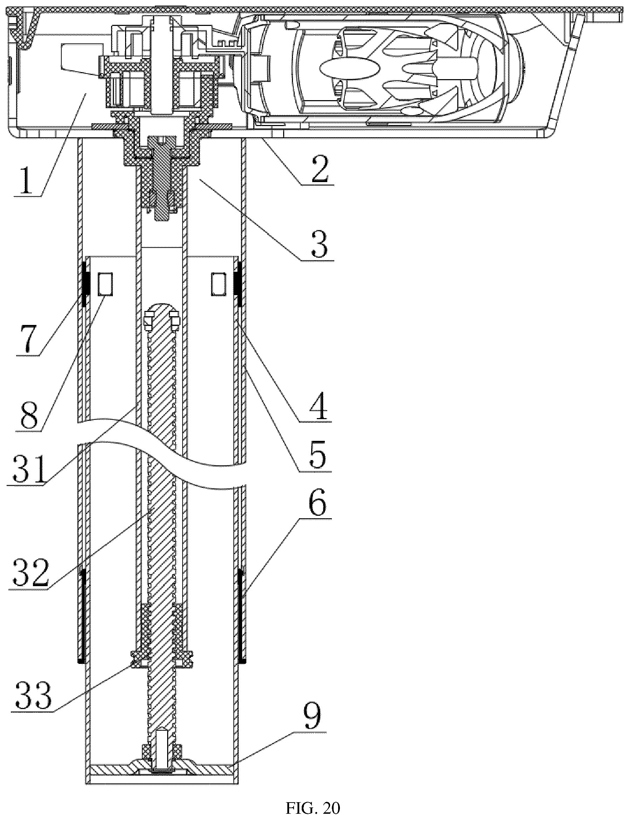

Furthermore, as shown in FIG. 20, the end of the screw rod 32 far from the box body 2 is directly connected to the bottom plate 9, the outer peripheral surface of the bottom plate 9 is fixedly connected to the inner wall of the second pipe body 4, and the box body 2 is fixedly connected to the first pipe body 5, preferably by welding. Or, as shown in FIG. 1, the end of the screw rod 32 far from the box body 2 is directly connected to the bottom plate 9, the outer peripheral surface of the bottom plate 9 is fixedly connected to the inner wall of the first pipe body 5, preferably by welding, and the box body 2 is fixedly connected to the second pipe body 4.

As a variant of Embodiment 3, the screw rod assembly 3 of the actuator shown in FIG. 1 and FIG. 2 can be mounted upside down. That is, one end of the screw rod 32 is coaxially connected to the rotating end of the driving part 1, one end of the hollow transmission rod 31 is fixed to the base plate 9, and the nut 33 fixed on the hollow transmission rod 31 is engaged with the screw rod 32 by threads. When working, the screw rod 32 is driven to rotate, but the hollow transmission rod 31 and the nut 33 do not rotate, only linearly expanding and contracting along the axis of the screw rod 32.

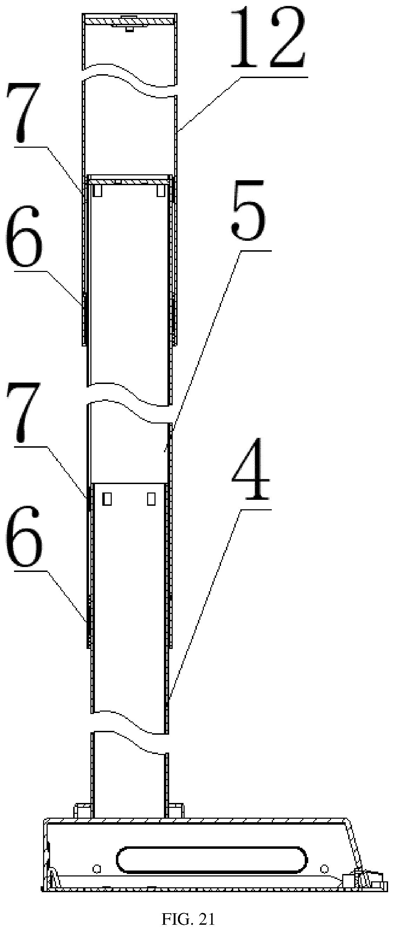

Furthermore, as shown in FIG. 21, the sliding structure further includes a third pipe body 12 which is slidable applied outside the first pipe body 5, and the structures (i.e., a first sliding part and a second sliding part) between the third pipe body 12 and the first pipe body 5 is the same as those (i.e., the first sliding part 6 and the second sliding part 7) between the first pipe body 5 and the second pipe body 4.

That is, the driving part 1 provides rotational power, and the screw rod assembly 3 converts the rotational power into linear retractable power. The sliding structure of this application can be that the first pipe body 5 is connected with the box body 2, or the second pipe body 4 is connected with the box body 2. The first pipe body 5 and the second pipe body 4 are driven by the screw rod assembly 3 to generate relative sliding. At the same time, the sliding structure is not limited to the sliding between the two pipes, but also can include the third pipe body 12 or more pipe bodies to form a multi-stage sliding structure, thus increasing the application range. The actuator can be widely used in lifting furniture, providing stable and reliable lifting function.

In the description of this specification, terms "an embodiment", "some embodiments", "illustrative embodiments", "examples", "specific examples" or "some examples" mean that the specific features, structures, materials or characteristics described in connection with the embodiments or examples are included in at least one embodiment or example of the present invention. In this specification, the illustrative expressions of the above terms do not necessarily refer to the same embodiment or example. Furthermore, the specific features, structures, materials or characteristics described may be combined in any one or more embodiments or examples in a suitable manner.

Although the embodiments of the present invention have been shown and described, those skilled in the art can understand that many changes, modifications, substitutions and variations can be made to these embodiments without departing from the principles and purposes of the present invention, and the scope of the present invention is defined by the claims and their equivalents.

## Claims

1. A sliding structure, wherein the sliding structure comprises:
a first pipe body (5);
a second pipe body (4), wherein the second pipe body is slidable disposed inside the first pipe body (5);
a second sliding part (7), wherein one side of the second piece (7) is clamped on an outer wall of the second pipe body (4), and the other side of the second piece (7) is slidable connected to an inner wall of the first pipe body (5); and
a first sliding part (6), wherein when the first sliding part (6) is not mounted into the first pipe body (5), a part of the first sliding part (6) extends beyond an end of the second pipe body (4), and the first sliding part (6) is directly clamped on the second pipe body (4) or indirectly clamped on the second pipe body (4) by the second sliding part (7); when the first sliding part (6) is mounted into the first pipe body (5), the first sliding part (6) is detached from the end of the second pipe body (4), one side of the first sliding part (6) is clamped on the inner wall of the first pipe body (5), and the other side of the first sliding part (6) is slidable connected to the outer wall of the second sliding part (4).

2. The sliding structure according to claim 1, wherein the first sliding part (6) comprises:
a connecting part (65), disposed between the second pipe body (4) and the first pipe body (5);
a flange edge (61), disposed at one end of the connecting part (65) and abutting against an end face of the first pipe body (5); and
a plurality of first sliders (62), disposed between the second pipe body (4) and the first pipe body (5), and connected to the other end of the connecting part (65).

3. The sliding structure according to claim 1, wherein an end of the outer wall of the second pipe body (4) is provided with a plurality of second slotted holes (8), and the second sliding part (7) comprises:
second bosses (72), the second bosses (72) being clamped inside the plurality of second slotted holes (8); and
second sliders (71), the second sliders (71) being connected to the second bosses (72) and being slidable connected to the first pipe body (5).

4. The sliding structure according to claim 2, wherein the first sliding part (6), when not mounted into the first pipe body (5), is directly clamped on the second pipe body (4), each of the plurality of first sliders (62) is inclined towards an inner side of the second pipe body (4), and the first slider (62) extends beyond the end of the second pipe body (4), and the first slider (6) is clamped on the end of the second pipe body (4).

5. The sliding structure according to claim 4, wherein a clamping part (64a) is provided between each of the plurality of first sliders (62) and the connecting part (65); the clamping part (64a) is disposed to face towardsthe second pipe body (4); when the first slider (6) is not mounted into the first pipe body (5), the clamping part (64a) is clamped and abuts against the end of the second pipe body (4).

6. The sliding structure according to claim 5, wherein the clamping part (64a) is a transition surface; one end of the transition surface is connected to the first slider (62), and the other end of the transition surface is connected to the connecting part (65).

7. The sliding structure according to claim 2, wherein the first sliding part (6), when not mounted into the first pipe body (5), is indirectly clamped on the second pipe body (4); the first sliding part (6) is engaged with the second sliding part (7), and the first slider (62) extends beyond the end of the second pipe body (4).

8. The sliding structure according to claim 7, wherein the second sliding part (7) is provided with a clamping tooth (73); the first sliding part (6) is provided with a bayonet (64) matching the clamping tooth (73); when the first sliding part (6) is not mounted into the first pipe body (5), the clamping tooth (73) is engaged with the bayonet (64).

9. The sliding structure according to claim 8, wherein the bayonet (64) comprises a stop wall and an escape wall; the stop wall is connected to the escape wall; the stop wall is located at a side of the bayonet (64) close to the flange edge (61); an acute angle is formed between the stop wall and the escape wall; the clamping tooth (73) is a rod-shaped protrusion inclined towards the bayonet (64); and when the first sliding part (6) is not mounted into the first pipe body (5), a bottom surface of the rod-shaped projection abuts against the stop wall, and a side of the rod-shaped projection abuts against the escape wall.

10. The sliding structure according to claim 2, wherein a sliding gap exists between the second pipe body (4) and the first pipe body (5); a thickness of the connecting part (65) is less than a dimension of the sliding gap; and a thickness of the first slider (62) is more than or equal to the dimension of the sliding gap.

11. The sliding structure according to claim 2, wherein a sliding gap exists between the second pipe body (4) and the first pipe body (5); interference fit is realized between the first slider (62) and the sliding gap; and clearance fit is realized between the connecting part (65) and the second pipe body (4).

12. The sliding structure according to claim 2, wherein each of the plurality of first sliders (62) is provided with a first boss (63) on a side of the first slider (62) facing towards the first pipe body (5), and a plurality of first slotted holes (10) for accommodating the first bosses (63) are provided at an end of the inner wall of the first pipe body (5).

13. The sliding structure according to claim 12, wherein a gap exists between the first boss (63) and the inner wall opposite to the first boss (63) of the first pipe body (5) when the first sliding part (6) is not mounted into the first pipe body (5).

14. The sliding structure according to claim 12, wherein the plurality of first slotted holes (10) do not penetrate the inner wall of the first pipe body (5).

15. The sliding structure according to claim 12, wherein a side of each of the first plurality of slotted holes (10) facing away from the flange edge (61) is provided with a chamfered surface (11), and a side of each of the plurality of first slotted holes (10) close to a side of the flange edge (61) abuts against the first boss (63).

16. The sliding structure according to claim 12, wherein a side of the first boss (63) facing away from the flange edge (61) has a guide slope, and the guide slope is configured for guiding the first pipe body (5) when the first sliding part (6) is not mounted into the first pipe body (5).

17. The sliding structure according to claim 2, wherein the plurality of first sliders (62) are arranged along a circumferential direction of the second pipe body (4).

18. The sliding structure according to claim 3, wherein the second sliders (71) are arranged along a circumferential direction of the second pipe body (4).

19. The sliding structure according to claim 1, wherein the first sliding part (6) is an annular structure, an unclosed C-shaped annular structure, or formed by splicing two opposite half rings.

20. A mounting method of the sliding structure according to any one of claims 2, 4, 5 and 6, wherein the mounting method comprises the following steps:
Step 1: vertically placing the second pipe body (4) on an operating platform;
Step 2: sleeving the first sliding part (6) on the second pipe body (4) from top to bottom, so that a part of an inner side of the first sliding part (6) abuts against an upper end of the second pipe body (4), and meanwhile the plurality of first sliders (62) are inclined towards an inside of the second pipe body (4), so that the first sliding part (6) is clamped on the end of the second pipe body (4);
Step 3: mounting the second sliding part (7) on the second pipe body (4); and
Step 4: sleeving the first pipe body (5) on an outer surface of the first sliding part (6) from top to bottom, wherein during the downward movement of the first pipe body (5), a lower end of the first pipe body (5) abuts against the flange edge (61) and drives the first sliding part (6) to move downward, so that the first slider (62) is disposed between the first pipe body (5) and the first second pipe body (4).

21. A mounting method of the sliding structure according to any one of claims 7-17, wherein the mounting method comprises the following steps:
Step 1: sleeving the first sliding part (6) on the second pipe body (4), and fixing the second sliding part (7) on the second pipe body (4);
Step 2: moving the first sliding part (6) until the first sliding part (6) is engaged with the second sliding part (7), so that the first sliding part (6) is fixed on the second pipe body (4);
Step 3: sleeving the first pipe body (5) on an outer surface of the first sliding part (6), to make the first pipe body (5) press the first sliding part (6) to bend and deform towards the second pipe body (4), so that the first pipe body (5) is sleeved on the first sliding part (6); and
Step 4: pushing the first pipe body (5) to sleeve the second pipe body (4). wherein when an end of the first pipe body (5) abuts against the flange edge (61), a side of the first sliding part (6) is clamped on the inner wall of the first pipe body (5), and then the first pipe body (5) drives the first sliding part (6) to depart from the second sliding part (7) so that the first sliding part (6) and the second sliding part (7) detach from each other.

22. An actuator, wherein the actuator comprises:
the sliding structure according to any one of claims 1-19;
a box body (2), the box body (2) being provided with a driving part (1) inside, and the box body (2) being fixedly connected to one end of the sliding structure; and
a screw rod assembly (3), disposed inside the sliding structure, and comprising a hollow transmission rod (31), a screw rod (32) and a nut (33), wherein one end of the hollow transmission rod (31) is connected to a rotating end of the driving part (1), and the other end of the hollow transmission rod (31) is fixedly connected to the nut (33); the screw rod (32) is disposed inside the hollow transmission rod (31), an outer peripheral surface of the driving rod (32) is engaged with the nut (33) by threads, and an end of the screw rod (32) facing away from the box body (2) is connected to the other end of the sliding structure, and the driving part (1) is configured to drive the sliding structure to perform concertina movement by the screw rod assembly (3).

23. The actuator according to claim 22, wherein the end of the screw rod (32) facing away from the box body (2) is directly connected to a bottom plate (9); an outer peripheral surface of the bottom plate (9) is fixedly connected to an inner wall of the second pipe body (4); and the box body (2) is fixedly connected to the first pipe body (5).

24. The actuator according to claim 22, wherein the end of the screw rod (32) facing away from the box body (2) is directly connected to a bottom plate (9); an outer peripheral surface of the bottom plate (9) is fixedly connected to the inner wall of the first pipe body (5); and the box body (2) is fixedly connected to the second pipe body (4).

25. The actuator according to claim 22, wherein the sliding structure further comprises:
a third pipe body (12), slidable sleeved on the first pipe body (5); and structures between the third pipe body (12) and the first pipe body (5) being the same as those between the first pipe body (5) and the second pipe body (4).
